# EUROPEAN PATENT SPECIFICATION

(11) **EP 2 093 555 B1**
(45) Date of publication and mention of the grant of the patent: **06.06.2012**
(21) Application number: 08151085.1
(22) Date of filing: 05.02.2008
(51) Int. Cl.: G01N 1/40, G01N 35/10, G01N 30/00, G01N 30/06

(54) **Automatic sample clean-up system**
Automatisches Probenreinigungssystem
Système de nettoyage d'échantillon automatique

(43) Date of publication of application: 26.08.2009
(73) Proprietor: The European Union, represented by the European Commission, 1049 Brussels (BE)
(72) Inventor: Ballesta, Pascual Pérez, 21021, Angera (IT); Lagler, Friedrich, 21023 Bosozzo (VA) (IT); Van Drooge, Barend, 21020, Monvalle (IT)
(74) Representative: Office Freylinger

(56) References cited:
- GB-A- 2 427 467
- US-A- 4 380 257
- US-A- 5 260 028

## Description

### FIELD OF THE INVENTION

The present invention generally relates to the field of sample preparation and analysis, and more precisely to the purification of samples by solid phase extraction.

### BACKGROUND OF THE INVENTION

In the field of sample analysis, purification or "clean-up" procedures are commonly used to prepare sample of complex matrixes for analysis on e.g. gas and liquid chromatography, and/or mass spectrometry. For those analysis a clean-up step in the analytical procedure, and often several fractionations of the sample, is necessary in order to be able to analyze chemical compounds (analytes). This is especially desirable when those compounds are to be detected at trace level. Without a clean-up and fractionation procedure, the amount of interference from the matrix would be too high to obtain credible results.

Solid-Phase Extraction (SPE) is one such clean-up method for sample preparation where a sample mixture is applied to a solid support (solid phase) which facilitates the separation of component parts of the mixture. The separation ability of solid phase extraction is based on the preferential affinity of desired or undesired solutes in a liquid (mobile phase) for a solid, stationary phase through which the sample is passed. Impurities in the sample are either washed away while the analyte of interest is retained on the stationary phase, or inversely. Analytes that are retained on the stationary phase can then be eluted from the solid phase extraction cartridge with the appropriate solvent.

Conventionally, the solid stationary phase is packed in a syringe-shaped cartridge, which can be mounted on a commercially available extraction manifold as e.g. described in US 4,810,471. The liquid sample is manually poured by the operator into the cartridge. Many SPE manifolds are equipped with a vacuum port; application of a vacuum speeds up the extraction process by pulling the liquid sample through the stationary phase. The analyte is collected with a sample tube rack inside the manifold, which collects the sample as it is eluted off the cartridge.

Such manual clean-up procedures using commercial cartridges however suffer from a lack of reproducibility, low productivity due to frequent operational errors introduced by operator's weariness.

US 4,380,257 concerns an apparatus for processing fluid materials. Samples of body fluids such as blood, urine, etc. are passed for analysis through an extraction cartridge. Fluids passing through the extraction cartridge 26 are selectively passed to a waste receptacle or a recovery cup by flexing a disklike support in which the extraction cartridge is supported. The disklike support is flexed by applying a differential gas pressure across the support.

US 5,260,028 discloses an automated SPE system.

### OBJECT OF THE INVENTION

The object of the present invention is to provide a system for performing SPE that does not present the above-mentioned drawbacks.

This object is achieved by a system as claimed in claim 1.

### SUMMARY OF THE INVENTION

To improve vacuum driven SPE, the present inventors have developed a system that permits the transfer of a liquid sample from a sample container to a treatment column, and collection of the effluent (fractionated or cleaned sample) in a systematic manner.

Accordingly, the present invention concerns a system for treating a liquid sample, wherein said liquid sample is vacuum pumped from a sample container through a treatment column downstream of which the effluent is collected.

According to an important aspect of the invention, the system comprises bypass means connected close to the inlet to the treatment column and selectively operable to avoid pumping through the treatment column.

Indeed, in a SPE system, where the main driving force is obtained by vacuum pumping, loading of the treatment column is made by sucking the sample from the liquid container. While pumping is thus initially required to drive the sample to the treatment column via the system's piping, this sample loading conventionally involves pumping through the treatment column. In case the treatment column has been pre-conditioned with a given solvent or other chemical, such pumping required during the sample loading phase would typically cause drying of the treatment column.

In the system according to the present invention, alteration of the pre-conditioned state of the treatment column may be avoided thanks to the bypass means. When the bypass mode is activated, the vacuum pump is coupled to the bypass means and no longer to the treatment column. The bypass means are preferably connected just before the inlet of the treatment column, which thus allows pulling the sample, or other liquid from its container up to the treatment column's inlet while avoiding pumping through the treatment column. The Bypass mode may thus typically be activated in a loading phase where a liquid sample is to be driven from the sample container to the treatment column.

Preferably, the system further includes a pre-collection chamber close to the inlet of the treatment column. The pre-collection chamber has a first outlet in communication with the inlet of the treatment column and a second outlet in communication with the bypass means. Such pre-collection chamber is advantageous as it permits loading a desired quantity (volume) of liquid just before the treatment column. This loading of the pre-collection chamber is advantageously carried out in the bypass mode. Vacuum is thus provided to the pre-collection chamber via the bypass means, to drive the sample therein, while pumping through the treatment column is avoided to prevent drying or modification of its pre-condition state.

In one embodiment, the bypass means comprise a duct portion having an inlet connected to the second outlet of the pre-collection chamber and an outlet coupled to valve means that are also coupled to the outlet of the treatment column for either pumping through the first or second outlet of the pre-collection chamber.

Preferably, the pre-collector chamber is vertically arranged on top of the treatment column, the first outlet being located at the bottom of the pre-collector chamber and the second outlet being situated in the upper region of the pre-collector chamber. Liquid sucked into the pre-collector chamber under vacuum pumping thus falls to the bottom of the pre-collector chamber and accumulates therein. Once a desired volume of liquid has collected in the pre-collection chamber, the bypass mode may be cancelled so as to pump through the treatment column.

A non-return valve is advantageously provided between the pre-collector chamber and the treatment column to allow the flow going only from the former to the latter.

In one embodiment, valve means is provided in the feed line upstream of the treatment column to allow selective connection of the latter with the sample container or with one or more solvent containers. The valve means may also allow coupling of said feed line with a pressurized nitrogen source in order to apply some pressure on the liquid flowing through the system.

Preferably, one or more sample containers are provided downstream of the treatment column for collecting the effluent flowing there out. They may be located in a vacuum chamber coupled to the vacuum pump that produces the system's driving force. Valve means are advantageously arranged between the treatment column and the vacuum chamber for selectively directing the effluent to a given container.

The vacuum source is advantageously designed to be adjustable, e.g. depending on solvent and sample properties. The vacuum level can be regulated by controlling the speed of the vacuum pump, which is connected to a vacuum valve, e.g. of the solenoid actuated type, coupled to the vacuum chamber.

Preferably the vacuum level is controlled by a PID module. In such case the vacuum pump is preferably coupled to the outlet of the vacuum chamber, to the vacuum valve and to a critical orifice. The use of such critical orifice allows to enhance the operating range of the vacuum pump.

The present system permits to clean up and fractionate liquid samples from various origins, such as liquid extracts from particulate matter and sediments. The instrument is useful in method preparation for research and also for routine analysis.

In a practical embodiment, the system is computer controlled and comprises a combination of valves, containers and tubes that allow the systematic dosage of the adsorbent cartridge with a sample solution for its separation for the fractions of interest. The automatic clean-up system is designed to work under vacuum conditions that act as the principal pumping force. Commercial type SPE cartridges (e.g. solid phase extraction cartridges from 5 to 60 ml capacity) or custom made treatment columns can be used.

The flow is advantageously regulated by PID control of the vacuum implemented by the software. This provides reproducible flows and can be easily changed according to the properties of the solvent.

A bypass duct (bypassing the treatment column) is combined with the pre-collector chamber, which is used to dose the sample, to extract solvent volume and prevent the drying of the treatment column during operation.

The dropping of the solvent from the pre-collector chamber to the treatment column can be speeded up by an electronically controlled pressurised nitrogen flow. The nitrogen stream can also be used to precondition the adsorbent cartridge by removing traces of humidity before the sample or pre-conditioning solvent is passed through the column.

The automation of the system may also involve the washing of the sample container. This can be done by an additional pressurized reservoir, which is used to add a reproducible dose of solvent into the sample container. In addition, the system allows the auto-cleaning of the lines after use and is thus ready for the next sample treatment.

All the parameters for operational control are commanded by the computer, which is provided with a specific software developed to carry out the various operations. Preferably, the software controls, on a time basis, all the hardware functions of the system. Further, the software allows the input of sequences of the operating steps commanding the hardware. Each step corresponds to a logical configuration of valve positions, pressure/vacuum settings and timing. A series of consecutive steps produce a sequence of commands, which consist in a matrix of instructions (time & positions) to be stored as a method. An input in milliseconds associated with each programmable step allows the timing of the commands to be executed.

The present invention also concerns a method for controlling the above system, namely comprising:
(a) a loading step of operating the bypass means in order to drive the sample or solvent from the sample container, respectively from the solvent container, up to the treatment column's inlet; and
(b) a subsequent treatment step of driving the sample, respectively the solvent, through the treatment column by sucking through the treatment column.

Preferably the loading step (a) involves collecting a given volume of sample or solvent into a pre-collection chamber close to the inlet of the treatment column in bypass mode, and subsequently forcing, in step (b) said volume of sample or solvent through the treatment column by coupling the latter to the vacuum source.

### BRIEF DESCRIPTION OF THE DRAWING

The present invention will now be described, by way of example, with reference to the accompanying Figure, in which:

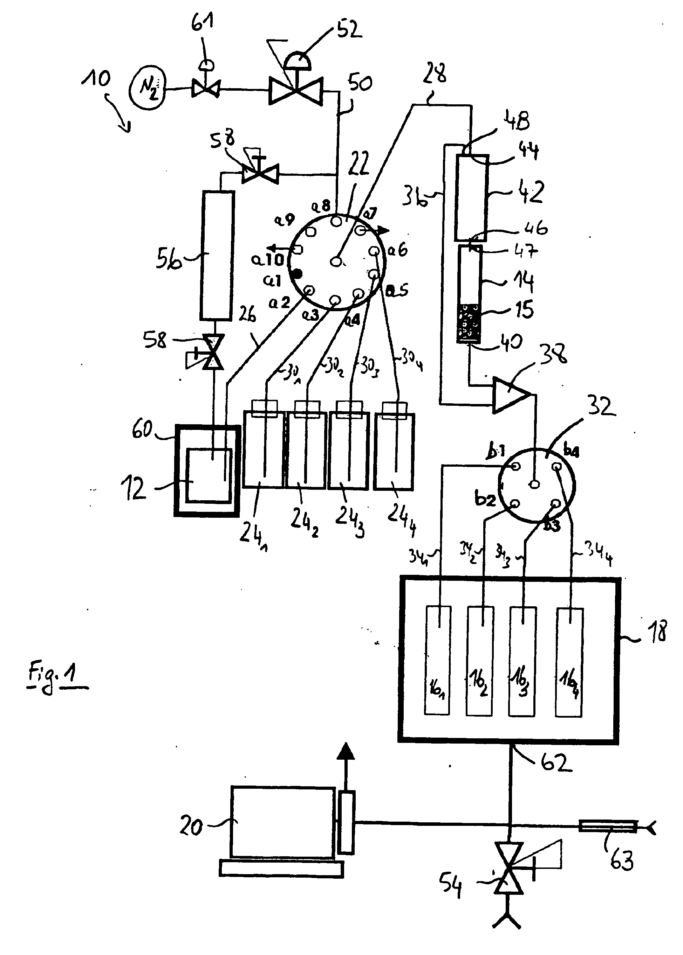

- FIG. 1:: is a principle diagram of a system in accordance with a preferred embodiment of the present invention.

### DETAILED DESCRIPTION OF A PREFERRED EMBODIMENT

The present system for treating a liquid sample mixture will now be described in more detail with reference to Fig.1, which schematically illustrates an embodiment of the system permitting automatic sample treatment. The system defines a closed circuit for the sample from a sample container to an effluent container downstream of a treatment column, the liquid sample being caused to flow through the system by vacuum pumping (main driving force for the liquid in the system).

Turning now to the Fig., the system 10 defines a fluid circuit comprising, in series, a sample container 12, a treatment column 14 with suitable reagent (adsorbent), and several effluent containers 16₁..16₄, preferably arranged inside a vacuum chamber 18 to which a vacuum pump 20 is coupled. It further includes ducting means arranged to provide a closed fluid circuit, so that the vacuum created by the vacuum pump permits to drive (suck/pull) the liquid sample from the sample container 12 through the treatment column 14 to a given effluent container 16i.

The present system is particularly useful for solid phase extraction to clean or more generally prepare samples for further analysis. The liquid sample can be e.g. an organic or inorganic sample extract. Accordingly, the treatment column 14 comprises a stationary phase 15 selected for the desired extraction procedure, as it is known to those skilled in the art. The treatment column 14 is preferably designed as a removable element, e.g. in the form of a cartridge or syringe, that can be easily replaced. A variety of SPE cartridges are commercially available, with different types of solid phase material. The system is thus advantageously designed to be compatible with commercial cartridges. Accordingly, it may comprise holding means that are adaptable to accommodate various types of commercially available cartridges as well as custom prepared treatment columns of various heights and widths.

The separation process occurs in the treatment column 14 where the liquid sample, driven therein from the sample container 12 due to the vacuum pumping, is forced through the solid, stationary phase 15. Depending on the selected operating protocol, impurities in the sample are either washed away while the analyte(s) of interest is/are retained on the stationary phase, or inversely.

For increased flexibility and versatility of the system 10, a multi-way valve, referred to as selector valve 22, is provided in the feed-line of the treatment column 14. It is used to select the loading of the treatment column 14 with the sample or any of a number of solvents (in solvent containers 24₁..24₄) that may be connected through the corresponding inlets of the selector valve 22. When in position a2, the selector valve 22 connects ducting 26 to ducting 28 so that the sample is sucked from the sample container 12. Positions 3 to 6 connect ducting 28 to respective ducts 30i of solvent containers 24i. Inlet a8 is reserved for a pressurized nitrogen stream, as will be explained further below, and inlets a10 and a7 act as vent lines to muffle the pressure when switching the selector valve 22.

Another multi-way valve or container selector 32 permits to direct the flow in the discharge line downstream of the treatment column 14 to a given container 16i in the vacuum chamber 18 via a respective conduit 34i.

It is to be appreciated that bypass means are provided to avoid vacuum pumping through the treatment column 14, when desired. The bypass means comprise a bypass duct 36 connecting the feed line to the discharge line, thereby bypassing the treatment column 14. In this embodiment, bypass duct 36 is connected on one side before the treatment column 14 and on the other side to one inlet of a bypass valve 38, the bypass valve 38 having another inlet coupled to the outlet 40 of the treatment column 14 and one outlet coupled to the common inlet of container selector 32. The bypass valve 38 is normally in the closed position, so that the sample or solvent is sucked through treatment column 14, as if no bypass duct 36 were provided. In the open (active) position of bypass valve 38 (i.e. in bypass mode), the outlet 40 of the treatment column 14 is no longer in communication with the vacuum source 20; but the latter is coupled to bypass duct 36, whereby pumping is not effected through the treatment column 14. The bypass means allows driving the liquid sample or a solvent from a respective container upstream of the selector valve 22 up to the inlet of the cartridge 14, without sucking through the treatment column 14. The bypass mode is particularly interesting to avoid drying/altering a treatment column 14 that has been pre-conditioned with a given solvent during the time period required to suck the liquid sample from the sample container 12 through the feed line near the treatment column 14 inlet.

In the present embodiment, the system 10 further advantageously includes a pre-collector chamber 42 arranged just before the treatment column 14. In practice, both the pre-collector chamber 42 and treatment column 14 are disposed vertically, one on top of the other. As can be seen from the Figure, duct 28 opens into the pre-collector chamber via inlet 44. The pre-collector chamber 42 has a first outlet 46 in its bottom, by which it is coupled to the inlet 47 of the treatment column 14. The bypass duct 36 is connected to a second outlet 48 of the pre-collector chamber 42, arranged in an upper portion thereof. Preferably, a non-return valve (not shown) is serially connected between the pre-collector chamber 42 and the treatment column 14, permitting that the flow only goes from chamber 42 to treatment column 14.

In such a configuration, a desired volume of liquid (sample and/or solvent) can be loaded in the pre-collector chamber 42 by sucking though the bypass duct 36 (in bypass mode, i.e. bypass valve 38 being open). Preferably the pre-collector chamber 42 is a transparent chamber, optionally with volumetric graduations. Once the desired volume of fluid has been loaded in the pre-collector chamber, the bypass valve 38 is switched back in the closed position, to re-connect the treatment column outlet 40 to the vacuum source 20 and proceed to the extraction. The liquid is sucked from the pre-collector chamber 42, forced through the adsorbent packing 15 in the treatment column 14 and collected in a container 16i in the vacuum chamber 18.

As it is known in the art, the solid phase may be designed to retain impurities, in which case the effluent flowing out of the treatment column is the cleaned-up sample. However, solid phase extraction may in some instances involve a multiple-step process. First, a solution which is to be analyzed and is believed to contain a certain constituent, is passed through the treatment column in which the solid adsorbent 15 (solid phase/packing) is capable of retaining the constituent. Different constituents may also be removed sequentially through a combination of solid packings. The treatment column may thus be a single tube prepared to contain one adsorbent packing or a series of packing adsorbents, spaced in flow direction. Alternatively, the treatment column 14 may comprise an assembly of two or more tubes with appropriate adsorbent packings, serially connected.

The sample is then passed through the treatment column (assembly), and a solvent is eluted through the treatment column to release the retained constituents in the eluent. Often, different constituents are removed sequentially by elution with different solvents through the treatment column.

The many possible variations of solid phase extraction that can be performed with the present system 10, using different arrangements and combinations for the treatment column 14, elution or washing sequences, are too numerous to mention and the individual reagents and processes are not material. Those skilled in the art are able to perform any kind of extraction using the present system.

As mentioned above, the system advantageously comprises a line 50 of pressurized nitrogen gas connected to inlet a8 of the selector valve 22. The pressure of nitrogen is initially fixed by a pressure reducer 61, for its control by an electronic pressure regulator 52, which permits to pressurize and accelerate the dosage of the sample or solvent.

The system is advantageously provided with means for adjusting the vacuum level to appropriate levels for optimal operation, e.g. depending on the properties of solvent or sample.

In the present embodiment, a PID (Proportional, Integrated and Differential) control module is used for controlling the pumping speed of the vacuum pump 20. The operational range of the vacuum pump 20 is conditioned by the inlet flow of a a control valve 54 (preferably of solenoid type) connected to the outlet of the vacuum chamber 62. When the valve 54 is closed, the operational range of the vacuum pump 20 is controlled instead by a "critical orifice" 63. In such a way, the vacuum pump is able to expand its working range with the same PID regulation parameters. As it is known to those skilled in the art, a critical orifice is a tube with calibrated through hole that is selected such that a constant flow is achieved when the vacuum level drops below a given value on the downstream side of the critical orifice.

Reference sign 56 indicates a washing solvent container for washing the sample container 12. As can be seen from the Fig., two on/off valves 58 are provided at both ends of washing solvent container 56 and the latter can thus be pressurized by the nitrogen stream from line 50.

Preferably the sample container 12 is located in a sample chamber 60. Once the sample container is placed in chamber 60, the sample treatment can be performed by sucking the sample, preferably and successively rinsing with solvent from container 56.

Although not shown, the present system 10 is advantageously controlled by a computer running an appropriate software. Selector valves 22 and 32, bypass valves 38, and on/off valves 58 and 54 as well as the electronic pressure regulator 52 are thus of the remotely actuatable type and connected to the computer. Hence, once the sample container 12 is put in place in chamber 60, the whole sample treatment can be carried out without requiring any operator manipulation. As for the computer control, the program can be designed to allow sequential process control by the operator, or to automatically perform part or all of the operational steps (sample loading, solvent extraction, pre-conditioning the cartridge, washing the lines, etc.).

As already mentioned, the system 10 is advantageously designed to be compatible with commercial cartridges such as e.g. Supelco®, 2-10 g, 12-60 mL, LC Si. Commercial type reservoirs and containers may of course also be used.

### Example:

The above-described system 10 finds particular application for samples that consist of complex matrixes. For those samples a clean-up step, and often several fractionations of the sample, is necessary in order to be able to analyse chemical compounds. This is especially desirable when those compounds are to be detected at trace level. Without a clean-up and fractionation procedure, the amount of interference from the matrix would be too high to obtain credible results.

The clean-up and fractionation of a sample on the system 10 is principally based on an adsorbent, which attaches the different chemical components of the sample, and the organic solvent that desorbs specific chemical compounds when it passes the adsorbent. However, no standard method for cleaning and fractionation of environmental samples exists. The required method depends on the target compounds that are object of the study. So, both adsorbents and organic solvents can vary among methods.

### A) Particulate phase of air sample:

Extraction of an air filter containing accumulated particulates was conventionally performed in a Microwave oven in 25mL hexane-acetone (1:1 v/v) at 115°C at 400W for 30 minutes. Then it was transferred to a glass vessel and concentrated to 1mL in a Turbovap (commercialised by Caliper Life Sciences) under a gentle stream of nitrogen at 50°C.

### B) Clean-up and fractionation

The commercially available SPE (solid phase extraction) cartridges (Supelco®) of 5 mL were used for the clean-up and fractionation, containing 2g of florisil adsorbent. After placing the SPE cartridge in position in the system, the (Turbovap) glass vessel containing the sample was poured in the vessel rack of the chamber 60. Flexible ducts for the subtraction of the sample and the addition of n-hexane (from solvent container 56) were placed in the vessel. Vacuum chamber 18 contains a rack with four glass vessels 16 for the collection of three fractions and a forth 'waste' fraction, which is added (selector valve 22 in position a3) to pre-condition the SPE cartridge before adding the sample.

Once the cartridge and all vessels are installed, the software program executing a desired sequence for the fractionation is run. With the use of the vacuum pump 20 the adequate solvents are sucked through the system at a slow speed. Valves opened, closed and switched when desired in order to obtain the programmed volumes.

The first fraction, containing the n-alkanes and poly chlorinated biphenyls (PCBs), was collected (valve 32 in position b2) by successively passing: 1 mL of sample (n-hexane); 2 mL of n-hexane (by rinsing the sample vessel twice with 1 mL of n-hexane from the solvent container 56); and 3 mL of n-pentane (valve 22 in position a4). Then, valve 22 was switched to position a5 and valve 32 to position b3, and a second fraction was collected in 8 mL dichloromethane:npentane (4:6 v/v). This second fraction contains the polyaromatic hydrocarbons (PAHs). A third fraction was collected in 12 mL of methanol by switching the valve 22 to position a6 and valve 32 to position b4. In this fraction polar compounds of the sample were collected. After the run of the sequence, the vessels 16 were removed and the different fractions were concentrated to 0,5mL in the Turbovap.

## Claims

1. System for treating a liquid sample, wherein said liquid sample is vacuum pumped by means of a vacuum pump from a sample container (12) through a treatment column (14) downstream of which the effluent is collected, **characterized by** bypass means connected before the treatment column inlet (47) and selectively operable to avoid pumping through the treatment column (14), wherein in bypass mode the vacuum pump is coupled to the bypass means and no longer to the treatment column.

2. System according claim 1, further comprising a pre-collection chamber (42) before said treatment column (14), said pre-collection chamber (42) having a first outlet (46) in communication with the inlet (47) of the treatment column and a second outlet (48) in communication with said bypass means.

3. System according claim 1 or 2, wherein said bypass means comprise a duct (36) and valve means (38) for either pumping through the first (46) or second outlet (48) of the pre-collector chamber (42).

4. System according claim 2 or 3, wherein said first outlet (46) is located at the bottom of said pre-collector chamber (42) and said second outlet (48) is in the upper region of said pre-collector chamber (42).

5. System according to any one of the preceding claims, further comprising a feed line upstream of said treatment column (14) with valve means (22) allowing selective connection with said sample container (12) or one or more solvent containers (24i).

6. System according to any one of the preceding claims, wherein said valve means (22) also allow coupling of said feed line with a pressurized nitrogen source.

7. System according to any one of the preceding claims, further comprising one or more sample containers (16i) downstream of said treatment column for collecting the effluent flowing out of said treatment column (14).

8. System according to the preceding claim, wherein said sample container(s) (16i) is/are arranged in a vacuum chamber (18) coupled to a vacuum pump (20).

9. System according to any one of the preceding claims, further comprising valve means (32) between said treatment column (14) and said vacuum chamber (18) for selectively directing the effluent to a given container (16i).

10. System according to any one of the preceding claims, further comprising a vacuum valve (54) coupled to the vacuum chamber (18) for regulating the vacuum level in the system.

11. System according to any one of claims 1 to 10, wherein the vacuum pump (20) is coupled to the outlet (62) of the vacuum chamber (18), to a vacuum valve (54) and to a critical orifice (63).

12. System according to any one of the preceding claims, further comprising a computerized control unit running an appropriate software for controlling the operation of the system.

13. System according to any one of claims 2 to 12, further comprising a non-return valve between said pre-collector chamber (42) and said treatment column (14).

14. A method for controlling a system according to any one of the preceding claims, comprising:
a loading step of operating the bypass means in order to drive the sample or solvent from the sample container, respectively from the solvent container, up to the treatment column's inlet, wherein in bypass mode the vacuum pump is coupled to the bypass means and no longer to the treatment column; and
a subsequent treatment step of driving the sample, respectively the solvent, through the treatment column by sucking through the treatment column.

## Patentansprüche

1. System zur Behandlung einer flüssigen Probe, wobei die flüssige Probe mittels einer Vakuumpumpe von einem Probenbehälter (12) durch eine Behandlungssäule (14) vakuumgepumpt wird, stromabwärts von welcher der Ausfluss gesammelt wird, **gekennzeichnet durch** Umgehungsmittel, die vor dem Behandlungssäuleneinlass (47) angeschlossen sind und selektiv betreibbar sind, um ein Pumpen **durch** die Behandlungssäule (14) zu vermeiden, wobei in der Umgehungsbetriebsart die Vakuumpumpe an die Umgehungsmittel und nicht mehr an die Behandlungssäule gekoppelt ist.

2. System nach Anspruch 1, ferner umfassend eine Vorsammelkammer (42) vor der Behandlungssäule (14), wobei die Vorsammelkammer (42) einen ersten Auslass (46) in Verbindung mit dem Einlass (47) der Behandlungssäule und einen zweiten Auslass (48) in Verbindung mit den Umgehungsmitteln aufweist.

3. System nach Anspruch 1 oder 2, wobei die Umgehungsmittel eine Leitung (36) und Ventilmittel (38) umfassen, um entweder durch den ersten (46) oder den zweiten Auslass (48) der Vorsammelkammer (42) zu pumpen.

4. System nach Anspruch 2 oder 3, wobei der erste Auslass (46) an der Unterseite der Vorsammelkammer (42) angeordnet ist und der zweite Auslass (48) sich im oberen Bereich der Vorsammelkammer (42) befindet.

5. System nach irgendeinem der vorangehenden Ansprüche, ferner umfassend eine Zufuhrleitung stromaufwärts der Behandlungssäule (14) mit Ventilmitteln (22), die eine selektive Verbindung mit dem Probenbehälter (12) oder einem oder mehreren Lösungsmittelbehältern (24i) gestatten.

6. System nach irgendeinem der vorangehenden Ansprüche, wobei die Ventilmittel (22) auch das Koppeln der Zufuhrleitung mit einer Druckstickstoffquelle gestattet.

7. System nach irgendeinem der vorangehenden Ansprüche, ferner umfassend einen oder mehrere Probenbehälter (16i) stromabwärts der Behandlungssäule zur Aufnahme des aus der Behandlungssäule (14) herausfließenden Ausflusses.

8. System nach dem vorangehenden Anspruch, wobei der/die Probenbehälter (16i) in einer Vakuumkammer (18) angeordnet ist/sind, die an eine Vakuumpumpe (20) gekoppelt ist.

9. System nach irgendeinem der vorangehenden Ansprüche, ferner umfassend Ventilmittel (32) zwischen der Behandlungssäule (14) und der Vakuumkammer (18), um den Ausfluss selektiv zu einem bestimmten Behälter (16i) zu leiten.

10. System nach irgendeinem der vorangehenden Ansprüche, ferner umfassend ein Vakuumventil (54), das an die Vakuumkammer (18) gekoppelt ist, um das Vakuumniveau in dem System zu regeln.

11. System nach irgendeinem der Ansprüche 1 bis 10, wobei die Vakuumpumpe (20) an den Auslass (62) der Vakuumkammer (18), an ein Vakuumventil (54) und an eine kritische Öffnung (63) gekoppelt ist.

12. System nach irgendeinem der vorangehenden Ansprüche, ferner umfassend ein computergestütztes Steuergerät, das eine geeignete Software ausführt, um den Betrieb des Systems zu steuern.

13. System nach irgendeinem der Ansprüche 2 bis 12, ferner umfassend ein Rückschlagventil zwischen der Vorsammelkammer (42) und der Behandlungssäule (14).

14. Verfahren zur Steuerung eines Systems nach irgendeinem der vorangehenden Ansprüche, umfassend:
einen Ladeschritt zum Betreiben der Umgehungsmittel, um die Probe oder das Lösungsmittel vom Probenbehälter bzw. vom Lösungsmittelbehälter aufwärts zum Behandlungssäuleneinlass zu treiben, wobei in der Umgehungsbetriebsart die Vakuumpumpe an die Umgehungsmittel und nicht mehr an die Behandlungssäule gekoppelt ist; und
einen anschließenden Behandlungsschritt zum Treiben der Probe bzw. des Lösungsmittels durch die Behandlungssäule mittels Ansaugung durch die Behandlungssäule.

## Revendications

1. Système de traitement d'un échantillon liquide, dans lequel ledit échantillon liquide est pompé par le vide au moyen d'une pompe à vide à partir d'un récipient d'échantillon (12) à travers une colonne de traitement (14) en aval de laquelle l'effluent est collecté, **caractérisé par** un moyen de contournement connecté avant l'entrée (47) de colonne de traitement et sélectivement utilisable pour éviter de pomper à travers la colonne de traitement (14), dans lequel, en mode de contournement, la pompe à vide est couplée au moyen de contournement et non plus à la colonne de traitement.

2. Système selon la revendication 1, comprenant en outre une chambre de pré-collecte (42) avant ladite colonne de traitement (14), ladite chambre de pré-collecte (42) ayant une première sortie (46) en communication avec l'entrée (47) de la colonne de traitement et une deuxième sortie (48) en communication avec ledit moyen de contournement.

3. Système selon la revendication 1 ou 2, dans lequel ledit moyen de contournement comprend une conduite (36) et un moyen de vanne (38) pour pomper à travers la première (46) ou la deuxième (48) sortie de la chambre de pré-collecte (42).

4. Système selon la revendication 2 ou 3, dans lequel ladite première sortie (46) est située au fond de ladite chambre de pré-collecte (42) et ladite deuxième sortie (48) est dans la région supérieure de ladite chambre de pré-collecte (42).

5. Système selon l'une quelconque des revendications précédentes, comprenant en outre une ligne d'alimentation en amont de ladite colonne de traitement (14) avec un moyen de vanne (22) permettant une connexion sélective avec ledit récipient d'échantillon (12) ou un ou plusieurs récipient(s) de solvant (24i).

6. Système selon l'une quelconque des revendications précédentes, dans lequel ledit moyen de vanne (22) permet également un couplage de ladite ligne d'alimentation avec une source d'azote sous pression.

7. Système selon l'une quelconque des revendications précédentes, comprenant en outre un ou plusieurs récipient(s) d'échantillon (16i) en aval de ladite colonne de traitement pour collecter l'effluent s'écoulant hors de ladite colonne de traitement (14).

8. Système selon la revendication précédente, dans lequel ledit/lesdits récipient(s) d'échantillon (16i) est/sont agencé(s) dans une chambre à vide (18) couplée à une pompe à vide (20).

9. Système selon l'une quelconque des revendications précédentes, comprenant en outre un moyen de vanne (32) entre ladite colonne de traitement (14) et ladite chambre à vide (18) pour diriger sélectivement l'effluent vers un récipient (16i) donné.

10. Système selon l'une quelconque des revendications précédentes, comprenant en outre une vanne de dépression (54) couplée à la chambre à vide (18) pour réguler le niveau de vide dans le système.

11. Système selon l'une quelconque des revendications 1 à 10, dans lequel la pompe à vide (20) est couplée à la sortie (62) de la chambre à vide (18), à une vanne de dépression (54) et à un orifice critique (63).

12. Système selon l'une quelconque des revendications précédentes, comprenant en outre une unité de commande informatisée faisant tourner un logiciel approprié pour commander le fonctionnement du système.

13. Système selon l'une quelconque des revendications 2 à 12, comprenant en outre un clapet anti-retour entre ladite chambre de pré-collecte (42) et ladite colonne de traitement (14).

14. Procédé de commande d'un système selon l'une quelconque des revendications précédentes, comprenant :
une étape de chargement consistant à utiliser le moyen de contournement afin d'entraîner l'échantillon ou le solvant du récipient d'échantillon, respectivement du récipient de solvant, jusqu'à l'entrée de colonne de traitement, dans lequel, en mode de contournement, la pompe à vide est couplée au moyen de contournement et non plus à la colonne de traitement ; et
une étape de traitement subséquente consistant à entraîner l'échantillon, respectivement le solvant, à travers la colonne de traitement par aspiration à travers la colonne de traitement.
